# FASCICULE DE BREVET EUROPEEN

(11) **EP 2 168 811 B1**
(45) Date de publication et mention de la délivrance du brevet: **11.09.2013**
(21) Numéro de dépôt: 09170792.7
(22) Date de dépôt: 21.09.2009
(51) Int. Cl.: B60Q 1/04, B60Q 1/26

(54) **Dispositif d'éclairage ou de signalisation de véhicule automobile comportant un organe de fixation équipé d'un élément élastiquement déformable**
Lighting or signalling device for an automobile comprising a fixing element equipped with an elastically deformable element
Beleuchtungs- oder Signalisierungsvorrichtung für Kraftfahrzeug, die ein Befestigungselement umfasst, das mit einem elastisch verformbaren Element versehen ist

(30) Priorité: 26.09.2008 FR 0805330
(43) Date de publication de la demande: 31.03.2010
(73) Titulaire: Valeo Vision, 93012 Bobigny (FR)
(72) Inventeur: Lelarge, Olivier, 89100, GRON (FR)

(56) Documents cités:
- EP-A- 0 679 553
- EP-A- 0 751 040
- EP-A- 1 050 432
- FR-A- 2 610 578
- FR-A- 2 747 085

## Description

L'invention se rapporte à un dispositif d'éclairage ou de signalisation de véhicule automobile comportant un boîtier qui est destiné à être fixé à un élément de carrosserie du véhicule automobile par des moyens de fixation.

L'invention se rapporte plus particulièrement à un dispositif d'éclairage ou de signalisation de véhicule automobile comportant un boîtier (arrière) qui est destiné à être fixé à un élément de carrosserie du véhicule automobile par des moyens de fixation qui comportent :
- un premier organe de fixation destiné à être fixé de manière rigide sur l'élément de carrosserie selon un axe (longitudinal) de montage ;
- un orifice de fixation du boîtier qui est destinée à recevoir en coulissement longitudinal un tronçon (longitudinal) avant de l'organe de fixation ;
- un élément déformable élastiquement selon une direction (longitudinale) qui est interposé entre une face radiale arrière d'appui de l'organe de fixation et une face radiale avant d'appui du boîtier, notamment de manière à presser le boîtier (longitudinalement) vers l'arrière contre l'élément de carrosserie, le coulissement (longitudinal) de l'organe de fixation étant limité vers l'arrière par rapport au boîtier par la face avant d'appui du boîtier.

La demande de brevet EP 751 040 A1 décrit un feu de signalisation pourvu de moyens de fixation par vissage pour fixer ce feu sur le véhicule.

Les dispositifs d'éclairage ou de signalisations de véhicule automobiles, notamment les projecteurs ou les feux, sont généralement un élément visuel important pour signer le style d'un véhicule automobile.

Pour améliorer l'aspect esthétique du véhicule, il est connu d'intégrer les projecteurs à la carrosserie du véhicule en faisant affleurer la glace des projecteurs aux éléments de carrosserie adjacents de manière à donner l'impression d'une continuité entre les courbes de la carrosserie et la surface de la glace de protection des projecteurs.

A cette fin, certaines zones des bords de la glace de protection sont en contact avec les éléments de carrosserie adjacents par l'intermédiaire de tampon de matériau élastique telle que de la mousse.

Lors de la fixation du projecteur dans une cavité prévue à cet effet dans la carrosserie du véhicule, il est très important de doser précisément l'effort axial de fixation au véhicule.

En effet, un effort de fixation trop important entraînerait un serrage très important des bords de la glace sur la carrosserie, et la création de contraintes très élevées dans la glace. La glace risque alors de se briser sous l'effet de ces contraintes, soit spontanément, soit sous l'effet d'une légère déformation de la carrosserie, par exemple lorsque le véhicule roule sur une route cahoteuse.

De plus, si l'effort de fixation est insuffisant, il existe un risque que le projecteur bouge dans sa cavité.

Pour résoudre ces problèmes, l'invention propose un dispositif d'éclairage ou de signalisation selon la revendication 1.

Selon d'autres caractéristiques optionnelles de l'invention :
- les moyens de fixation à baïonnette comportent une paire d'encoches qui sont conformées de manière que la fixation à baïonnette de la coupelle soit réalisée successivement par au moins un premier mouvement de translation (longitudinal) vers l'arrière de la coupelle, et un deuxième mouvement d'accrochage par rotation de la coupelle autour d'un axe (longitudinal) par rapport au tronçon avant de l'organe de fixation ;
- chaque encoche comporte une première portion avant formant une fente qui s'étend (longitudinalement) vers l'arrière depuis un bord d'extrémité avant du tronçon avant, de préférence de forme sensiblement tubulaire, et une deuxième portion arrière en forme de crochet recourbé jusqu'à un fond avant, les deux encoches présentant une forme sensiblement identique par symétrie axiale par rapport à un axe (longitudinal) ;
- les moyens de fixation à baïonnette comportent une paire d'encoches qui sont conformées de manière que la fixation à baïonnette de la coupelle soit réalisée successivement par au moins un premier mouvement de translation (longitudinal) vers l'arrière de la coupelle, et un deuxième mouvement d'accrochage par translation radiale des moyens de fixation à baïonnette de la coupelle par rapport au tronçon avant de l'organe de fixation ;
- chaque encoche comporte une première portion avant formant une fente qui s'étend (longitudinalement) vers l'arrière depuis un bord d'extrémité avant du tronçon avant tubulaire et une deuxième portion arrière en forme de crochet recourbé jusqu'à un fond avant, les deux encoches présentant une forme sensiblement identique par symétrie plane par rapport à un plan axial passant par un axe ;
- à la fin du deuxième mouvement d'accrochage, l'élément élastiquement déformable est comprimé, notamment de manière à pousser automatiquement les moyens de fixation à baïonnette de la coupelle contre le fond de la portion en crochet des encoches ;
- les encoches comportent des rampes de guidage pour guider automatiquement le deuxième mouvement d'accrochage de la coupelle pendant le premier mouvement de translation longitudinal vers l'arrière ;
- l'élément élastiquement déformable est formé par un ressort hélicoïdal, notamment cylindrique ;
- le boîtier comporte un logement de fixation qui s'étend (longitudinalement) vers l'avant depuis le plan radial de l'orifice de fixation et qui est délimité radialement vers l'extérieur par une face (cylindrique) intérieure qui entoure l'orifice de fixation et qui guide la compression du ressort selon un axe (longitudinal) ;
- le contour intérieur de l'orifice de fixation et le contour extérieur du tronçon avant de l'organe de fixation présentent des formes complémentaires non circulaires qui coopèrent pour empêcher la rotation du corps de l'organe de fixation autour de l'axe longitudinal de montage par rapport au boîtier ; il peut par exemple s'agir de formes complémentaires de type polygone (carré, hexagone...) ou tout autre forme comportant deux segments de droite contigus, le reste du profil pouvant être courbe, ou encore un profil courbe avec un méplat donné.
- l'organe de fixation comporte une tige filetée qui est destinée à être reçue dans un trou de fixation de l'élément de carrosserie pour sa fixation rigide par vissage d'un écrou ;
- le tronçon avant de l'organe de fixation comporte une face radiale arrière de butée contre l'élément de carrosserie ;
- la tige filetée comporte un collet comportant une face avant de butée de l'organe de fixation contre le boîtier et une face arrière de butée contre l'élément de carrosserie ;
- un joint est interposé entre la face radiale arrière du tronçon avant de l'organe de fixation et l'élément de carrosserie ;
- le logement est réalisé dans une douille dont l'extrémité avant est ouverte pour permettre l'introduction de l'élément élastiquement déformable et de la coupelle ;
- le logement est réalisé dans une douille dont l'extrémité avant est fermée par une paroi avant et qui comporte une ouverture qui est agencée dans la paroi (cylindrique) pour permettre l'introduction de l'élément élastiquement déformable et de la coupelle.

D'autres caractéristiques et avantages de l'invention apparaîtront à la lecture de la description détaillée qui va suivre pour la compréhension de laquelle on se reportera aux dessins annexés, parmi lesquels :
- la figure 1 est une vue en perspective qui représente l'arrière d'un boîtier de feu de signalisation équipé de moyens de fixation réalisés selon les enseignements de l'invention ;
- la figure 2 est une vue en perspective éclatée qui représente les moyens de fixation réalisés selon les enseignements de l'invention ;
- la figure 3 est une vue en perspective vue sous un angle opposé à celui de la figure 2 qui représente le trou de fixation du boîtier et la vis de fixation ;
- la figure 4 est une vue de détail en perspective qui représente l'extrémité de la vis de fixation comportant des encoches pour la fixation à baïonnette de la coupelle ;
- la figure 5 est une vue similaire à celle de la figure 4 qui représente une variante de réalisation des encoches ;
- la figure 6 est une vue en coupe axiale qui représente le boîtier lors du positionnement des moyens de fixation sur l'élément de carrosserie ;
- la figure 7 est une vue similaire à celle de la figure 6 qui représente le boîtier fixé sur l'élément de carrosserie ;
- la figure 8 est une vue en perspective avec arrachement qui représente un deuxième mode de réalisation de l'invention.

Dans la suite de la description, on adoptera à titre non limitatif une orientation longitudinale dirigée d'arrière en avant qui est indiquée par la flèche "L" aux figures, et des orientations radiales qui rayonnent perpendiculairement à l'axe longitudinal depuis l'intérieur vers l'extérieur. On comprendra que l'orientation longitudinale se rapporte à l'orientation de l'axe de montage "A" et non à l'axe du véhicule automobile, le montage du feu pouvant, notamment se faire selon un axe oblique par rapport à l'axe longitudinal du véhicule lui-même.

Dans la suite de la description, des éléments ayant des fonctions similaires, analogues ou identiques seront désignés par des mêmes numéros de référence.

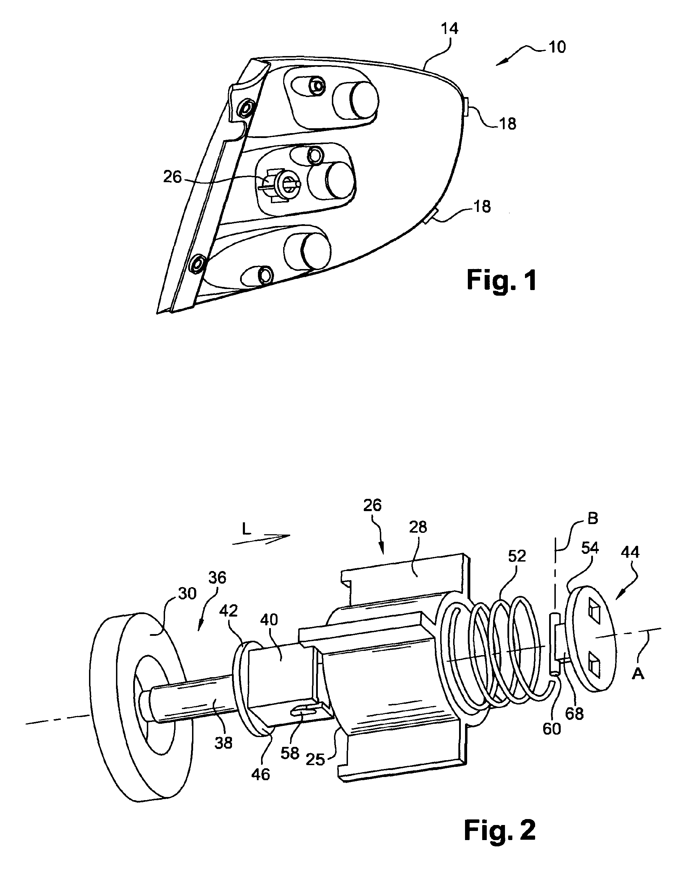

On a représenté à la figure 1 un feu 10 de véhicule automobile comportant un boîtier arrière 12 qui est fermé par une glace avant 14. Seul le bord périphérique de la glace 14 est visible à la figure 1. Le feu de signalisation 10 est destiné à être fixé sur le véhicule automobile dans une cavité (non représentée) de la carrosserie prévue à cet effet.

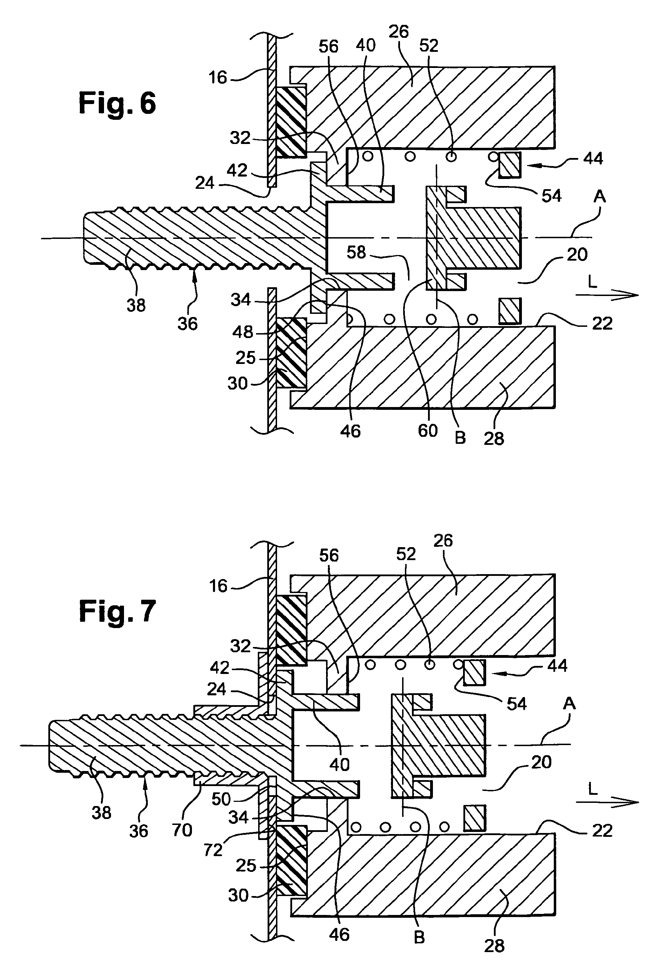

Comme représenté aux figures 6 et 7, la cavité du véhicule est ouverte vers l'avant et elle est limitée longitudinalement vers l'arrière par un fond formé par un élément de carrosserie 16 globalement radial.

Le pourtour de la cavité est aussi bordé par les bords d'éléments d'habillage (non représentés) de la carrosserie. Lors de la fixation du feu de signalisation 10, le bord périphérique de la glace 14 est destiné à être mis en contact avec les bords des éléments d'habillage afin que la surface de la glace 14 affleure à la surface des éléments d'habillage.

Pour éviter que la glace 14 ne soit endommagée par contact direct avec les éléments d'habillage, des tampons d'amortissement 18 réalisés en un matériau élastique, telle que de la mousse, sont interposés entre le bord de la glace 14 et les éléments d'habillage.

La face externe arrière du boîtier 12 comporte des logements de fixation 20 ouverts longitudinalement vers l'arrière dans lesquels sont destinés à être reçus des moyens de fixation qui seront décrits plus en détail par la suite. Le boîtier 12 comporte ici trois logements de fixation 20 non alignés pour permettre une fixation isostatique du feu de signalisation 10 dans la cavité.

Les moyens de fixation et les logements de fixation 20 ont été représentés plus en détail aux figures 2, 6, 7. Les moyens de fixation et les logements de fixation 20 étant tous identiques, un seul de ces logements de fixation 20 et les moyens de fixation associés seront décrits par la suite.

Le logement de fixation 20 présente une face intérieure cylindrique 22 d'axe longitudinal "A" qui est destinée à être agencé en coïncidence avec un trou de fixation 24 associé de l'élément de carrosserie 16 formant le fond de la cavité.

La face cylindrique intérieure 22 présente un profil radial de forme circulaire.

Le logement de fixation 20 est ici agencé dans une douille cylindrique 26 qui s'étend longitudinalement en saillie vers l'arrière par rapport à la face arrière du boîtier 12.

Le bord circulaire d'extrémité arrière 25 de la douille 26 est destiné à être appuyé contre une face avant de l'élément de carrosserie 16 lorsque le feu de signalisation 10 est fixé sur le véhicule.

Dans le mode de réalisation représenté aux figures, la douille 26 est réalisée venue de matière avec le boîtier 12. Dans ce cas, le logement de fixation 20 est débouchant à l'intérieur du feu de signalisation 10 afin de pouvoir avoir accès à l'intérieur de la douille 26 longitudinalement par l'avant comme cela sera expliqué par la suite.

Selon une variante non représentée de l'invention, la douille 26 est rapportée et fixée sur le boîtier. Dans ce cas, il est possible d'avoir accès à l'intérieur de la douille longitudinalement par l'avant avant la fixation de la douille sur la face arrière du boîtier. Ceci permet notamment d'éviter d'exposer le boîtier 12 à des problèmes d'étanchéité.

La douille 26 comporte aussi des ailes 28 radiales longitudinales qui s'étendent vers l'extérieur depuis sa paroi extérieure cylindrique. Les ailes 28 sont ici au nombre de quatre et elles sont réparties régulièrement autour de la douille 26.

Ses ailes 28 forment ainsi des nervures de renfort de la douille 26. A cet effet, le bord radial avant de chaque aile 28 est en appui contre la face arrière du boîtier 12.

De plus, les ailes sont destinées à servir de support pour une rondelle annulaire en matériau élastomère 30 qui est destinée à être interposée entre le bord d'extrémité arrière 25 de la douille 26 et la face avant de l'élément de carrosserie 16. Cette rondelle 30 à d'une part pour fonction d'absorber les jeux de montage du feu de signalisation 10 par rapport à l'élément de carrosserie 16, et, d'autre part, le logement de fixation 20 étant débouchant à l'intérieur du feu de signalisation 10, d'assurer l'étanchéité du feu de signalisation 10 en évitant que des liquides n'entrent dans le feu de signalisation 10 par le logement de fixation 20.

Pour permettre un maintien radial de la rondelle 30, la distance entre l'extrémité extérieure du bord radial arrière de chaque aile 28 et l'axe "A" du logement 20 est supérieur au rayon extérieur de la rondelle 30. De plus, le bord radial avant de chaque aile 28 présente un ergot qui s'étend longitudinalement vers l'avant depuis son extrémité extérieure. Ainsi, la rondelle 30 est maintenue radialement dans tous les sens dans une position coaxiale à l'axe "A" de la douille 26 lorsque la rondelle 30 est plaquée axialement vers l'avant contre le bord d'extrémité arrière 25 de la douille 26.

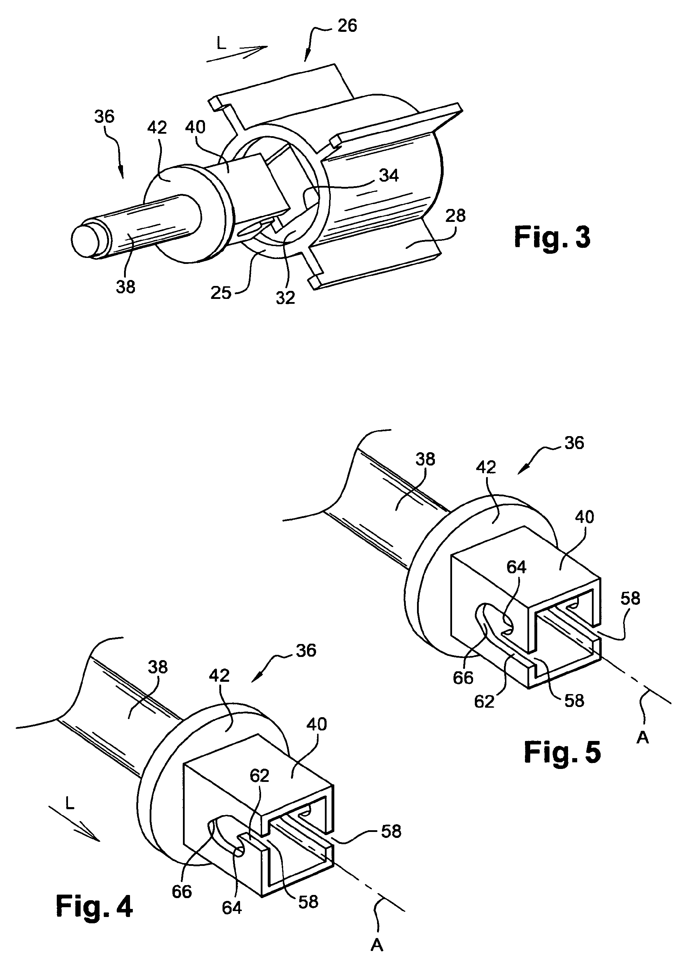

Le logement de fixation 20 comporte à proximité de son extrémité arrière une collerette 32 qui s'étend radialement vers l'intérieur depuis sa face cylindrique intérieure 22. La collerette 32 délimite radialement vers l'intérieur un orifice de fixation 34. L'orifice de fixation 34 présente un contour de forme non circulaire. Il s'agit ici d'un contour présentant la forme d'un carré, comme cela est illustré à la figure 3.

Ainsi, le logement de fixation 20 s'étend en partie longitudinalement vers l'avant depuis le plan radial de l'orifice de fixation 34 et la face cylindrique intérieure 22 du logement 20 entoure l'orifice de fixation 34.

Les moyens de fixation comportent un premier organe de fixation qui est destiné à être fixé de manière rigide sur l'élément de carrosserie 16 selon l'axe longitudinal "A".

Ce premier organe de fixation comporte plus particulièrement un corps 36 qui comporte une tige filetée 38 d'extrémité arrière d'axe longitudinale "A" et un tronçon 40 d'extrémité avant dans le prolongement axiale de la tige 38. Un collet 42 de contour circulaire coaxial l'axe "A" est interposé longitudinalement entre la tige filetée 38 arrière et le tronçon avant 40 et qui s'étend radialement en saillie vers l'extérieur par rapport à la tige filetée 38 et par rapport au tronçon avant 40.

Le corps 36 de l'organe de fixation est réalisé en une seule pièce venue de matière.

Le premier organe de fixation comporte aussi une coupelle d'appui 44 en forme de disque qui est rapportée sur le tronçon avant 40 du corps 36 et qui est destinée à être montée coulissante axialement dans le logement de fixation 20.

Le tronçon avant 40 du corps 36 se présente sous la forme d'une jupe tubulaire qui s'étend longitudinalement vers l'avant depuis la face avant 46 du collet 42. La paroi tubulaire du tronçon avant 40 présente une épaisseur constante.

Le profil du tronçon avant 40 présente un contour extérieur de forme complémentaire de celui de l'orifice de fixation 34 de la collerette 32 du logement de fixation 20, de manière que le tronçon avant 40 soit reçu coulissant longitudinalement à travers l'orifice de fixation 34 du boîtier 12. Les contours du tronçon avant 40 et de l'orifice de fixation 34 étant non circulaires, le corps 36 est bloqué en rotation dans les deux sens par rapport au boîtier 12 autour de son axe longitudinal "A".

En outre, le coulissement longitudinal du corps 36 de l'organe de fixation est limité vers l'avant par rapport à la douille 26 par butée axiale entre la face avant 46 du collet 42 du corps 36 et une face arrière 48 de la collerette 32 de la douille 26, comme cela est représenté à la figure 6. A cet effet, le diamètre extérieur du collet 42 est inférieur au diamètre intérieur de la face intérieur cylindrique 22 du logement de fixation 20.

Le collet 42 comportant aussi une face arrière 50 formant une face arrière de butée contre l'élément de carrosserie 16 lorsque l'organe de fixation est fixé rigidement sur l'élément de carrosserie 16, comme représenté à la figure 7. La face arrière 50 du collet 42 est plus particulièrement destinée à venir directement au contact de l'élément de carrosserie 16 pour permettre une fixation parfaitement rigide. A cet effet, le trou de fixation 24 de l'élément de carrosserie 16 présente un diamètre inférieur au diamètre extérieur du collet 42, et la rondelle 30 présente un diamètre intérieur supérieur au diamètre extérieur du collet 42.

Selon une variante non représentée de l'invention, un joint d'étanchéité en matériau élastomère est interposé entre la face arrière du collet et l'élément de carrosserie.

Un élément déformable élastiquement 52 selon une direction longitudinale est interposé entre une face radiale arrière d'appui 54 de l'organe de fixation qui est portée par la coupelle 44 et une face radiale avant d'appui 56 qui est portée par la collerette 34 du boîtier 12.

Dans le mode de réalisation représenté aux figures, l'élément élastiquement déformable est formé par un ressort 52 hélicoïdal cylindrique de compression.

La longueur axiale au repos du ressort 52 et sa rigidité sont prévus pour que, lorsque l'organe de fixation 36, 44 est fixé rigidement sur l'élément de carrosserie 16, le boîtier 12 soit pressé longitudinalement vers l'arrière contre l'élément de carrosserie 16 par le ressort 52.

Dans cette configuration, le ressort 52 permet en outre de limiter le coulissement longitudinal de l'organe de fixation 36, 44 vers l'arrière par rapport à la douille 26. L'organe de fixation 36, 44 est ainsi limité en coulissement longitudinal dans les deux sens par rapport à la douille 26, ce qui permet de monter l'organe de fixation 26 dans le logement de fixation 20 de la douille 26 avant l'opération de fixation du feu de signalisation sur le véhicule sans risquer de perdre les organes de fixation 36, 44.

La face intérieure cylindrique 22 de la douille 26 permet en outre de guider la compression du ressort 52 selon un axe longitudinal. A cet effet, le ressort 52 présente un diamètre extérieur sensiblement égal au diamètre intérieur de la face intérieure cylindrique 22 de la douille 26, avec un jeu radial suffisant pour permettre la compression du ressort 52 sans blocage par frottement contre la face intérieure cylindrique 22.

Pour permettre le montage du ressort 52 dans le logement de fixation 20, le ressort 52 et le corps 36 sont tout d'abord positionné dans le logement de fixation 20 de la douille 26.

Le ressort 52 est introduit longitudinalement vers l'arrière par l'extrémité avant de la douille 26 jusqu'à être en butée contre la face avant d'appui 56 de la collerette 32 de la douille 26. A cet effet, le ressort 52 présente un diamètre intérieur supérieur aux dimensions radiales du tronçon avant 40 de manière que le tronçon avant 40 soit agencé à l'intérieur de l'espace cylindrique délimité par le ressort 52.

Le tronçon avant 40 du corps 36 est introduit longitudinalement vers l'avant dans l'orifice de fixation 34 par l'extrémité arrière de la douille 26 jusqu'à ce que la face avant du collet 36 soit en butée contre la face arrière 48 de la collerette 32.

Ensuite seulement, la coupelle d'appui 44 est introduite dans le logement de fixation 20 longitudinalement vers l'arrière par l'extrémité avant de la douille 26. La coupelle 44 est alors fixée sur le tronçon avant 40 par accrochage à l'encontre de l'effort axial susceptible d'être exercé par le ressort 52 vers l'avant sur la face arrière d'appui 54 de la coupelle 44 lors de sa compression.

Le ressort 52 est ainsi enfermé entre la coupelle 44 et la face avant d'appui 56 de la collerette 32.

La coupelle d'appui 44 comporte des premiers moyens de fixation à baïonnette qui sont destinés à être emboîtés dans des deuxièmes moyens de fixation à baïonnette du tronçon avant 40 du corps 36 de l'organe de fixation.

Plus particulièrement, la paroi du tronçon avant 40 comporte une paire d'encoches 58 opposées qui sont destinées à recevoir chacune une patte radiale 60 de la coupelle 44.

Chaque encoche 58 comporte une première portion 62 avant formant une fente qui s'étend longitudinalement vers l'arrière depuis un bord d'extrémité avant du tronçon avant 40 tubulaire. Chaque encoche 58 comporte aussi une deuxième portion arrière en forme de crochet recourbé jusqu'à un fond avant 64 décalé parallèlement au bord d'extrémité avant du tronçon avant 40 par rapport à la fente longitudinale 62.

Un bord 66 de l'encoche situé longitudinalement dans le prolongement de la fente longitudinale 62 présente la forme d'une rampe de guidage qui est inclinée de manière à guider la patte 60 de la coupelle en alignement longitudinal avec le fond 64 du crochet lorsque la patte 60 est poussée longitudinalement vers l'arrière contre la rampe de guidage 66.

Les pattes 60 de la coupelle 44 s'étendent radialement en opposition l'une à l'autre et selon un même axe "B" d'orientation radial par rapport à l'axe longitudinal "A", depuis une protubérance 68 qui fait saillie longitudinalement vers l'arrière depuis le centre de la face arrière d'appui 54 de la coupelle 44, jusqu'à une extrémité libre. La longueur de chaque patte 60 est prévue de manière à ne pas interférer avec le ressort 52.

Les deux encoches 58 du tronçon avant 40 sont agencées sur deux parois opposées et parallèles du tronçon avant 40.

Comme représentée à la figure 4, les deux encoches 58 présentent une forme identique par symétrie axiale par rapport à l'axe longitudinal "A".

Ainsi, les encoches 58 sont conformées de manière que la fixation à baïonnette de la coupelle 44 soit réalisée successivement par un premier mouvement de translation longitudinal vers l'arrière de la coupelle 44 dans lequel chaque patte 60 pénètre dans la fente longitudinal 62 associée, puis un deuxième mouvement d'accrochage par rotation de la coupelle 44 par rapport au corps 36 de l'organe de fixation dans lequel chaque patte 60 est alignée axialement avec le fond 64 de l'encoche 58 associée.

Lors de ce montage, le ressort 52 est comprimé de manière que, lorsque la coupelle 44 est relâchée, le ressort 52 pousse automatiquement les pattes 64 contre le fond 64 de la portion en crochet des encoches 58. La coupelle 44 est ainsi accrochée au corps 36 de l'organe de fixation.

Avantageusement, le fond 64 de chaque encoche 58 est agencé à équidistance des bords longitudinaux des parois associées, de manière qu'en reliant l'axe "B" des pattes 60 de la coupelle 44 soit orthogonal aux parois du tronçon avant 40 dans lesquelles les encoches 58 sont réalisées. Ainsi la fente longitudinale 62 de chaque encoche 58 ne débouche pas au milieu du bord avant associé du tronçon avant 40.

Selon une variante de l'invention qui est représentée à la figure 5, les encoches 58 opposés présentent une forme identique par symétrie plane par rapport à un plan axial passant par l'axe "A" et parallèle aux parois portant des encoches 58. La fixation à baïonnette de la coupelle 44 est alors réalisée successivement par un premier mouvement de translation longitudinal vers l'arrière de la coupelle 44, comme sur la figure 4, puis un deuxième mouvement d'accrochage par translation radiale des pattes 60 de la coupelle 44 par rapport au corps 36 de l'organe de fixation.

Lors du premier mouvement de translation, la coupelle 44 est insérée de manière inclinée par rapport à un plan radial car la première portion en forme de fente 62 des encoches 58 est décalée radialement par rapport à l'axe "A". Lors du deuxième mouvement d'accrochage par translation radiale, la coupelle 44 pivote autour d'un axe radial de manière revenir dans un plan radial car les fonds 64 des encoches 58 sont alignés dans un même plan axial. Dans ce cas, un jeu radial est réservé entre la coupelle 44 et la face intérieure cylindrique 22 du logement de fixation 20 pour permettre le pivotement de la coupelle 44 autour de l'axe "B" des pattes 60. Lors de ce montage, le ressort 52 est comprimé de manière que, lorsque la coupelle 44 est relâchée, le ressort 52 pousse automatiquement les pattes 64 contre le fond 64 de la portion en crochet des encoches 58. La coupelle 44 est ainsi accrochée au corps 36 de l'organe de fixation.

Dans les deux cas représentés aux figures 4 et 5, les rampes de guidage 66 permettent de guider automatiquement le deuxième mouvement d'accrochage de la coupelle 44 sur la fin du premier mouvement de translation longitudinal par contact et glissement des pattes 60 sur la rampe de guidage 66 lorsque l'opérateur pousse longitudinalement la coupelle 44 vers l'arrière.

Ce type de fixation à baïonnette avec accrochage automatique permet ainsi de monter la coupelle 44 "en aveugle" sur le corps 36 de l'organe de fixation.

Selon une variante non représentée de l'invention, on peut aussi prévoir que le bord d'extrémité avant de la paroi portant une encoche soit biseauté entre l'entrée de la fente longitudinale et son extrémité de manière à former un entonnoir qui guide la patte 60 automatiquement vers l'entrée de la fente longitudinale. Ceci permet de simplifier encore l'opération de fixation de la coupelle sur le corps de l'organe de fixation.

L'opération de fixation du feu de signalisation 10 sur l'élément de carrosserie 16 est à présent décrite en référence aux figures 6 et 7. L'organe de fixation 36, 44 et le ressort 52 ont été préalablement montés dans le logement de fixation 20 du boîtier 12.

Comme représenté à la figure 6, le feu de signalisation 10 est positionné sur le véhicule en faisant correspondre les bords de la glace 14 avec les bords correspondant des éléments d'habillage adjacent. Lors de cette mise en position, l'extrémité arrière libre de la tige filetée 38 est insérée dans le trou de fixation 24 de l'élément de carrosserie 16 par coulissement longitudinal vers l'arrière jusqu'à ce que le bord d'extrémité arrière 25 de la douille 26 soit en contact avec la face avant de l'élément de carrosserie 16 avec interposition de la rondelle 30.

L'épaisseur longitudinale de la rondelle 30 est prévue de manière que dans cette position du feu de signalisation 10, la rondelle 30 est comprimée entre la douille 26 et l'élément de carrosserie 16.

La face avant 46 du collet 42 du corps 36 de l'organe de fixation est alors poussée longitudinalement vers l'avant contre la face arrière 48 de la collerette 32 de la douille 26 par le ressort 52 qui pousse sur la coupelle 44 en prenant appui sur la face d'appui avant 56 de la collerette 32.

Puis, comme représenté à la figure 7, un écrou de fixation 70 est vissé à l'extrémité arrière libre de la tige filetée 38. L'écrou 70 comporte une face avant 72 qui est destinée à venir axialement vers l'avant en butée contre la face arrière de l'élément de carrosserie 16.

Le corps 36 de l'organe de fixation n'est pas entraîné en rotation par le vissage de l'écrou 70 du fait de son blocage en rotation par rapport à l'orifice de fixation 34 du boîtier 12.

Selon une variante non représentée de l'invention, une rondelle est interposée entre la face avant de l'écrou et la face arrière de l'élément de carrosserie.

En poursuivant le vissage de l'écrou 70, l'écrou 70 prend appui sur la face arrière de l'élément de carrosserie 16 pour tirer longitudinalement vers l'arrière l'organe de fixation 36, 44 et notamment la coupelle 44 à l'encontre de l'effort élastique du ressort 52 jusqu'à ce que la face arrière 50 du collet 42 soit en butée axiale contre la face avant de l'élément de carrosserie 16. L'organe de fixation 36, 44 est alors fixé rigidement sur l'élément de carrosserie 16 par vissage de l'écrou 70.

Le ressort 52 est alors encore plus comprimé entre la face arrière d'appui 54 de la coupelle 44 et la face d'appui avant 56 de la collerette 32. Le boîtier 12 est ainsi plaqué vers l'arrière contre la face avant de l'élément de carrosserie 16 en comprimant fortement la rondelle 30 par l'effort élastique longitudinal du ressort 52.

Ainsi, la force avec laquelle le boîtier 12 est plaqué vers l'arrière contre l'élément de carrosserie 16 ne dépend que de la compression du ressort 12 et elle ne dépend pas du couple de serrage appliqué à l'écrou 70. L'effort axial appliqué pour fixer le feu de signalisation 10 sur l'élément de carrosserie 16 est ainsi limité de manière à ne pas endommager la glace 14 du feu de signalisation 10.

De plus, le ressort 52 qui plaque le feu de signalisation 10 contre l'élément de carrosserie 16 est susceptible d'absorber certaines déformations de la carrosserie provoquées par des vibrations lors du roulage du véhicule.

De plus, les rondelles 30, en plus de leur fonction d'étanchéité, permettent de répartir les efforts équitablement sur chacun des trois points de fixation du feu de signalisation 10 sur l'élément de carrosserie16.

Un tel organe de fixation est aisé à monter grâce à la possibilité de montage en aveugle de la coupelle 44 sur le corps 36.

De plus, le montage à baïonnette permet de ne pas avoir recours à des moyens de fixation rapportés pour la fixation de la coupelle 44 sur le corps 36.

En outre, le fait que l'organe de fixation 36, 44 soit limité en coulissement dans les deux sens par rapport à l'orifice de fixation 34 permet d'éviter de le perdre jusqu'à ce que la fixation du feu de signalisation 10 sur l'élément de carrosserie 16 soit effectuée.

Selon une variante non représentée de l'invention, les encoches portées par la coupelle tandis que les pattes sont portées par le tronçon avant du corps de l'organe de fixation.

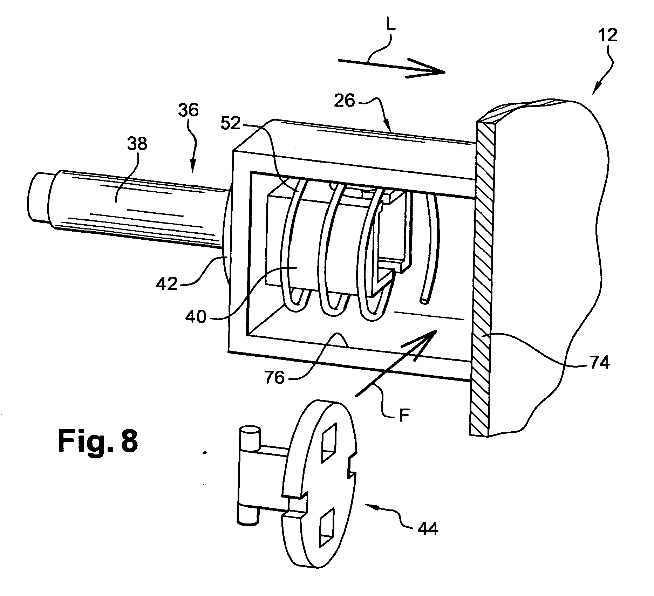

Un deuxième mode de réalisation de l'invention a été représenté à la figure 8. Ce deuxième mode de réalisation est très similaire à celui qui a été décrit précédemment. Seules les différences seront donc décrites par la suite.

Ainsi, à la différence du premier mode de réalisation de l'invention, la douille 26 est fermée vers l'avant par une paroi radiale avant 74. Une ouverture 76 est réalisée dans la paroi cylindrique de la douille 26 longitudinalement en avant de la collerette 32. L'ouverture 76 est adaptée pour permettre l'introduction radialement par le côté du ressort 52 et de la coupelle 44 à l'intérieur de la douille 26 selon la direction de montage indiquée par la flèche "F" de la figure 8.

Avantageusement, la longueur longitudinale du logement 20 est supérieure à la longueur du ressort 52 au repos de manière à faciliter l'introduction de la coupelle 44 entre l'extrémité avant du ressort 52 au repos et la paroi avant 74 de la douille 26 lorsque le ressort 52 est en butée contre la face avant d'appui 56 de la collerette 32.

Cette disposition permet de réaliser la douille 26 venue de matière avec le boîtier 12 du feu de signalisation 10 sans exposer le boîtier 12 à des problèmes d'étanchéité.

Dans l'exemple représenté à la figure 8, la paroi avant 74 de la douille 26 est agencée dans le prolongement de la paroi arrière du boîtier 12 de manière à former une portion de la paroi du boîtier 12. Le boîtier 12 demeure ainsi fermé.

L'invention a été décrite en application à un feu de signalisation de véhicule automobile. On comprendra qu'elle est aussi applicable pour la fixation de projecteurs et aux feux de signalisation avant ou arrière, et de manière plus générale, à tout dispositif d'éclairage ou de signalisation de véhicule automobile.

## Revendications

1. Dispositif d'éclairage ou de signalisation (10) de véhicule automobile comportant un boîtier (12) muni de moyens de fixation à un élément de carrosserie (16) du véhicule automobile, les moyens de fixation comportant :
- un organe de fixation (36, 44) comprenant un corps (36) et une coupelle d'appui (44) et destiné à être fixé de manière rigide sur l'élément de carrosserie (16) selon un axe (A) de montage, le dispositif d'éclairage ou de signalisation (10) définissant une direction avant, l'élément de carrosserie (16) définissant une direction arrière,
- un orifice de fixation (34) du boîtier (12) qui est destiné à recevoir en coulissement un tronçon avant (40) du corps (36),
- un élément déformable élastiquement (52) selon l'axe de montage (A) qui est interposé entre une face radiale arrière d'appui (54) de la coupelle d'appui (44) et une face radiale avant d'appui (56) du boîtier (12),
les moyens de fixation étant tels que la coupelle d'appui (44) est rapportée sur le tronçon avant (40) par l'avant de l'orifice de fixation (34) du boîtier (12) de manière à serrer l'élément déformable élastiquement (52) entre la face radiale arrière d'appui (54) de la coupelle d'appui (44) et la face avant d'appui (56) du boîtier (12) pour presser le boîtier (12) vers l'arrière contre l'élément de carrosserie (16), et limiter le coulissement de l'organe de fixation vers l'arrière par rapport au boîtier (12)
**caractérisé en ce que** la coupelle d'appui (44) comporte des premiers moyens de fixation à baïonnette (60) qui sont emboîtés dans des deuxièmes moyens de fixation à baïonnette (58) du tronçon avant (40) du corps (36) de l'organe de fixation.

2. Dispositif d'éclairage ou de signalisation (10) selon la revendication précédente, **caractérisé en ce que** les moyens de fixation à baïonnette comportent une paire d'encoches (58) qui sont conformées de manière que la fixation à baïonnette de la coupelle (44) soit réalisée successivement par au moins :
- un premier mouvement de translation vers l'arrière de la coupelle (44), et
- un deuxième mouvement d'accrochage par rotation de la coupelle (44) autour d'un axe (A) par rapport au tronçon avant (40) de l'organe de fixation.

3. Dispositif d'éclairage ou de signalisation (10) selon l'une des revendications 1 ou 2, **caractérisé en ce que** les moyens de fixation à baïonnette comportent une paire d'encoches (58), chaque encoche comportant une première portion (62) avant formant une fente qui s'étend longitudinalement vers l'arrière depuis un bord d'extrémité avant du tronçon avant (40) et une deuxième portion arrière en forme de crochet recourbé jusqu'à un fond avant (64), et **en ce que** les deux encoches (58) présentent une forme sensiblement identique par symétrie axiale par rapport à un axe (A).

4. Dispositif d'éclairage ou de signalisation (10) selon l'une des revendications 1 à 3, **caractérisé en ce que** les moyens de fixation à baïonnette comportent une paire d'encoches (58) qui sont conformées de manière que la fixation à baïonnette de la coupelle (44) soit réalisée successivement par au moins :
- un premier mouvement de translation vers l'arrière de la coupelle (44), et
- un deuxième mouvement d'accrochage par translation radiale des moyens de fixation à baïonnette (60) de la coupelle (44) par rapport au tronçon avant (40) de l'organe de fixation.

5. Dispositif d'éclairage ou de signalisation (10) selon l'une des revendications 1 à 4, **caractérisé en ce que** les moyens de fixation à baïonnette comportent une paire d'encoches (58), chaque encoche comportant une première portion (62) avant formant une fente qui s'étend longitudinalement vers l'arrière depuis un bord d'extrémité avant du tronçon avant (40) tubulaire et une deuxième portion arrière en forme de crochet recourbé jusqu'à un fond avant (64), et **en ce que** les deux encoches (58) présentent une forme sensiblement identique par symétrie plane par rapport à un plan axial passant par un axe (A).

6. Dispositif d'éclairage ou de signalisation (10) selon l'une quelconque des revendications 3 ou 5, **caractérisé en ce que**, à la fin du deuxième mouvement d'accrochage, l'élément élastiquement déformable (52) est comprimé de manière à pousser automatiquement les moyens de fixation à baïonnette (60) de la coupelle (44) contre le fond (64) de la portion en crochet des encoches (58).

7. Dispositif d'éclairage ou de signalisation (10) selon l'une quelconque des revendications 2 à 6, **caractérisé en ce que** les encoches (58) comportent des rampes de guidage (66) pour guider automatiquement le deuxième mouvement d'accrochage de la coupelle (44) pendant le premier mouvement de translation longitudinal vers l'arrière.

8. Dispositif d'éclairage ou de signalisation (10) selon l'une quelconque des revendications précédentes, **caractérisé en ce que** l'élément élastiquement déformable (52) est formé par un ressort hélicoïdal (52).

9. Dispositif d'éclairage ou de signalisation (10) selon la revendication précédente, **caractérisé en ce que** le boîtier (12) comporte un logement de fixation (20) qui s'étend longitudinalement vers l'avant depuis le plan radial de l'orifice de fixation (34) et qui est délimité radialement vers l'extérieur par une face cylindrique intérieure (22) qui entoure l'orifice de fixation (34) et qui guide la compression du ressort (52) selon un axe longitudinal (A).

10. Dispositif d'éclairage ou de signalisation (10) selon l'une quelconque des revendications précédentes, **caractérisé en ce que** le contour intérieur de l'orifice de fixation (34) et le contour extérieur du tronçon avant (40) de l'organe de fixation (36, 44) présentent des formes complémentaires non circulaires, notamment destinées à qui coopérer pour empêcher la rotation du corps de l'organe de fixation (36) autour de l'axe de montage (A) par rapport au boîtier (12).

11. Dispositif d'éclairage ou de signalisation (10) selon l'une quelconque des revendications précédentes, **caractérisé en ce que** l'organe de fixation (36, 44) comporte une tige filetée (38) qui est destinée à être reçue dans un trou de fixation (24) de l'élément de carrosserie (16) pour sa fixation rigide par vissage d'un écrou (70).

12. Dispositif d'éclairage ou de signalisation (10) selon la revendication précédente, **caractérisé en ce que** le tronçon avant (40) de l'organe de fixation comporte une face radiale arrière (50) de butée contre l'élément de carrosserie (16).

13. Dispositif d'éclairage ou de signalisation (10) selon la revendication précédente, **caractérisé en ce que** la tige filetée (38) comporte un collet (42) comportant une face avant (50) de butée de l'organe de fixation (36, 44) contre le boîtier (12) et une face arrière (46) de butée contre l'élément de carrosserie (16).

14. Dispositif d'éclairage ou de signalisation (10) selon l'une quelconque des revendications 13 ou 12, **caractérisé en ce qu'**un joint est interposé entre la face radiale arrière (50) du tronçon avant (40) de l'organe de fixation et l'élément de carrosserie (16).

## Patentansprüche

1. Beleuchtungs- oder Signalgebungsvorrichtung für Kraftfahrzeuge mit einem Gehäuse (12), das mit Mitteln zum Befestigen an einem Karosseriebauteil (16) des Kraftfahrzeugs versehen ist, wobei die Befestigungsmittel umfassen:
- ein Befestigungsorgan (36, 44), das einen Körper (36) und einen Auflageteller (44) umfasst und dazu bestimmt ist, an dem Karosseriebauteil (16) längs einer Montageachse (A) starr befestigt zu werden, wobei die Beleuchtungs- oder Signalgebungsvorrichtung (10) eine vordere Richtung, das Karosseriebauteil (16) eine hintere Richtung definiert,
- eine Öffnung (34) zum Befestigen des Gehäuses (12), die dazu bestimmt ist, ein vorderes Segment (40) des Körpers (36) gleitend aufzunehmen,
- ein längs der Montageachse (A) elastisch verformbares Element (52), das zwischen eine hintere radiale Anlagefläche (54) des Auflagetellers (44) und eine vordere radiale Anlagefläche (56) des Gehäuses (12) eingefügt ist,
wobei die Befestigungsmittel solchermaßen ausgeführt sind, dass der Auflageteller (44) auf dem vorderen Segment (40) durch die Vorderseite der Befestigungsöffnung (34) des Gehäuses (12) derart aufgesetzt ist, dass das elastisch verformbare Element (52) zwischen die hintere radiale Anlagefläche (54) des Auflagetellers (44) und die vordere Anlagefläche (56) des Gehäuses (12) geklemmt wird, um das Gehäuse (12) nach hinten gegen das Karosseriebauteil (16) zu drücken und das Gleiten des Befestigungsorgans bezüglich des Gehäuses (12) nach hinten einzuschränken,
**dadurch gekennzeichnet, dass** der Auflageteller (44) erste Bajonettbefestigungsmittel (60) umfasst, die in zweite Bajonettbefestigungsmittel (58) des vorderen Segments (40) des Körpers (36) des Befestigungsorgans eingefügt sind.

2. Beleuchtungs- oder Signalgebungsvorrichtung (10) nach dem vorhergehenden Anspruch,
**dadurch gekennzeichnet, dass** die Bajonettbefestigungsmittel zwei Schlitze (58) aufweisen, die solchermaßen ausgebildet sind, dass die Bajonettbefestigung des Tellers (44) aufeinanderfolgend durch wenigstens:
- eine erste Translationsbewegung zur Rückseite des Tellers (44) und
- eine zweite Einrastbewegung durch Drehen des Tellers (44) um eine Achse (A) bezüglich des vorderen Segments (40) des Befestigungsorgans
erfolgt.

3. Beleuchtungs- oder Signalgebungsvorrichtung (10) nach einem der Ansprüche 1 oder 2,
**dadurch gekennzeichnet, dass** die Bajonettbefestigungsmittel zwei Schlitze (58) aufweisen, wobei jeder Schlitz einen spaltförmigen ersten vorderen Abschnitt (62), der sich von einem äußeren vorderen Rand des vorderen Segments (40) aus längs nach hinten erstreckt, und einen zweiten hinteren Abschnitt in Form eines bis zu einem vorderen Boden (64) gebogenen Hakens aufweist, und dass die beiden Schlitze (58) durch axiale Symmetrie bezüglich einer Achse (A) eine im Wesentlichen identische Form aufweisen.

4. Beleuchtungs- oder Signalgebungsvorrichtung (10) nach einem der Ansprüche 1 bis 3,
**dadurch gekennzeichnet, dass** die Bajonettbefestigungsmittel zwei Schlitze (58) aufweisen, die solchermaßen ausgebildet sind, dass die Bajonettbefestigung des Tellers (44) aufeinanderfolgend durch wenigstens:
- eine erste Translationsbewegung zur Rückseite des Tellers (44) und
- eine zweite Einrastbewegung durch radiale Translation der Bajonettbefestigungsmittel (60) des Tellers (44) bezüglich des vorderen Segments (40) des Befestigungsorgans
erfolgt.

5. Beleuchtungs- oder Signalgebungsvorrichtung (10) nach einem der Ansprüche 1 bis 4,
**dadurch gekennzeichnet, dass** die Bajonettbefestigungsmittel zwei Schlitze (58) aufweisen, wobei jeder Schlitz einen spaltförmigen ersten vorderen Abschnitt (62), der sich von einem vorderen äußeren Rand des vorderen röhrenförmigen Segments (40) aus längs nach hinten erstreckt, und einen zweiten hinteren Abschnitt in Form eines bis zu einem vorderen Boden (64) gebogenen Hakens aufweist, und dass die beiden Schlitze (58) durch flächige Symmetrie bezüglich einer durch eine Achse (A) verlaufenden axialen Ebene eine im Wesentlichen identische Form aufweisen.

6. Beleuchtungs- oder Signalgebungsvorrichtung (10) nach einem der Ansprüche 3 oder 5,
**dadurch gekennzeichnet, dass** am Ende der zweiten Einrastbewegung das elastisch verformbare Element (52) derart komprimiert ist, dass die Bajonettbefestigungsmittel (60) des Tellers (44) automatisch gegen den Boden (64) des hakenförmigen Abschnitts der Schlitze (58) gedrückt werden.

7. Beleuchtungs- oder Signalgebungsvorrichtung (10) nach einem der Ansprüche 2 bis 6,
**dadurch gekennzeichnet, dass** die Schlitze (58) Führungsrampen (66) aufweisen, um die zweite Einrastbewegung des Tellers (44) während der ersten Längstranslationsbewegung nach hinten automatisch zu führen.

8. Beleuchtungs- oder Signalgebungsvorrichtung (10) nach einem der vorhergehenden Ansprüche,
**dadurch gekennzeichnet, dass** das elastisch verformbare Element (52) durch eine Schraubenfeder (52) gebildet ist.

9. Beleuchtungs- oder Signalgebungsvorrichtung (10) nach dem vorhergehenden Anspruch,
**dadurch gekennzeichnet, dass** das Gehäuse (12) eine Befestigungsaufnahme (20) aufweist, die sich von der radialen Ebene der Befestigungsöffnung (34) aus längs nach vorne erstreckt und die durch eine zylindrische Innenseite (22), die die Befestigungsöffnung (34) umgibt und das Komprimieren der Feder (52) längs einer Längsachse (A) führt, radial nach außen begrenzt ist.

10. Beleuchtungs- oder Signalgebungsvorrichtung (10) nach einem der vorhergehenden Ansprüche,
**dadurch gekennzeichnet, dass** der Innenumfang der Befestigungsöffnung (34) und der Außenumfang des vorderen Segments (40) des Befestigungsorgans (36, 44) nicht kreisförmige komplementäre Formen aufweisen, die insbesondere dazu bestimmt sind zusammenzuwirken, um das Drehen des Körpers des Befestigungsorgans (36) um die Montageachse (A) bezüglich des Gehäuses (12) zu verhindern.

11. Beleuchtungs- oder Signalgebungsvorrichtung (10) nach einem der vorhergehenden Ansprüche,
**dadurch gekennzeichnet, dass** das Befestigungsorgan (36, 44) einen Gewindestift (38) aufweist, der zur Aufnahme in einem Befestigungsloch (24) des Karosseriebauteils (16) bestimmt ist, um durch Anschrauben einer Mutter (70) starr befestigt zu werden.

12. Beleuchtungs- oder Signalgebungsvorrichtung (10) nach dem vorhergehenden Anspruch,
**dadurch gekennzeichnet, dass** das vordere Segment (40) des Befestigungsorgans eine radiale Rückseite (50) zum Anschlag gegen das Karosseriebauteil (16) aufweist.

13. Beleuchtungs- oder Signalgebungsvorrichtung (10) nach dem vorhergehenden Anspruch,
**dadurch gekennzeichnet, dass** der Gewindestift (38) einen Ansatz (42) umfasst, der eine Vorderseite (50) zum Anschlag des Befestigungsorgans (36, 44) gegen das Gehäuse (12) und eine Rückseite (46) zum Anschlag gegen das Karosseriebauteil (16) aufweist.

14. Beleuchtungs- oder Signalgebungsvorrichtung (10) nach einem der Ansprüche 13 oder 12,
**dadurch gekennzeichnet, dass** eine Dichtung zwischen die radiale Rückseite (50) des vorderen Segments (40) des Befestigungsorgans und das Karosseriebauteil (16) eingefügt ist.

## Claims

1. Lighting or signalling device (10) for a motor vehicle, comprising a housing (12) provided with means for securing on a bodywork element (16) of the motor vehicle, the securing means comprising:
- a securing unit (36, 44) which comprises a body (36) and a support dish (44), and is designed to be secured rigidly on the bodywork element (16) according to a fitting axis (A), the lighting or signalling device (10) defining a front direction and the bodywork element (16) defining a rear direction;
- a securing opening (34) for the housing (12), which is designed to receive in a sliding manner a front section (40) of the body (36);
- an element (52) which is resiliently deformable according to the fitting axis (A) and is interposed between a rear radial support surface (54) of the support dish (44), and a front radial support surface (56) of the housing (12),
the securing means being such that the support dish (44) is added onto the front section (40) via the front of the securing opening (34) of the housing (12), such as to clamp the resiliently deformable element (52) between the rear radial support surface (54) of the support dish (44) and the front support surface (56) of the housing (12), in order to press the housing (12) rearwards against the bodywork element (16), and limits the sliding of the securing element rearwards relative to the housing (12),
**characterised in that** the support dish (44) comprises first bayonet securing means (60) which are fitted in second bayonet securing means (58) of the front section (40) of the body (36) of the securing unit.

2. Lighting or signalling device (10) according to the preceding claim, **characterised in that** the bayonet securing means comprise a pair of notches (58) which are formed such that the bayonet securing of the dish (44) is carried out successively by at least:
- a first movement of translation rearwards of the dish (44); and
- a second movement of coupling by rotation of the dish (44) around an axis (A) relative to the front section (40) of the securing unit.

3. Lighting or signalling device (10) according to one of claims 1 or 2, **characterised in that** the bayonet securing means comprise a pair of notches (58), each notch comprising a first, front portion (62) forming a slot which extends longitudinally rearwards from a front end edge of the front section (40), and a second, rear portion in the form of a hook which is curved as far as a front base (64), and **in that** the two notches (58) have a form which is substantially identical by axial symmetry relative to an axis (A).

4. Lighting or signalling device (10) according to one of claims 1 to 3, **characterised in that** the bayonet securing means comprise a pair of notches (58) which are formed such that the bayonet securing of the dish (44) is carried out in succession by at least:
- a first movement of translation rearwards of the dish (44); and
- a second movement of coupling by radial translation of the bayonet securing means (60) of the dish (44) relative to the front section (40) of the securing unit.

5. Lighting or signalling device (10) according to one of claims 1 to 4, **characterised in that** the bayonet securing means comprise a pair of notches (58), each notch comprising a first, front portion (62) forming a slot which extends longitudinally rearwards from a front end edge of the tubular front section (40), and a second, rear portion in the form of a hook which is curved as far as a front base (64), and **in that** the two notches (58) have a form which is substantially identical by flat symmetry relative to an axial plane which passes via an axis (A).

6. Lighting or signalling device (10) according to either of claims 3 or 5, **characterised in that**, at the end of the second coupling movement, the resiliently deformable element (52) is compressed such as to thrust the bayonet securing means (60) of the dish (44) automatically against the base (64) of the hooked portion of the notches (58).

7. Lighting or signalling device (10) according to any one of claims 2 to 6, **characterised in that** the notches (58) comprise guide ramps (66), in order to guide the second coupling movement of the dish (44) automatically during the first movement of longitudinal translation rearwards.

8. Lighting or signalling device (10) according to any one of the preceding claims, **characterised in that** the resiliently deformable element (52) is formed by a helical spring (52).

9. Lighting or signalling device (10) according to the preceding claim, **characterised in that** the housing (12) comprises a securing receptacle (20) which extends longitudinally forwards from the radial plane of the securing opening (34), and is delimited radially towards the exterior by an inner cylindrical surface (22) which surrounds the securing opening (34) and guides the compression of the spring (52) according to a longitudinal axis (A).

10. Lighting or signalling device (10) according to any one of the preceding claims, **characterised in that** the inner contour of the securing opening (34) and the outer contour of the front section (40) of the securing unit (36, 44) have non-circular complementary forms, which are designed in particular to co-operate in order to prevent the rotation of the body of the securing unit (36) around the fitting axis (A), relative to the housing (12).

11. Lighting or signalling device (10) according to any one of the preceding claims, **characterised in that** the securing unit (36, 44) comprises a threaded rod (38) which is designed to be received in a securing hole (24) in the bodywork element (16), in order to be rigidly secured by screwing of a nut (70).

12. Lighting or signalling device (10) according to the preceding claim, **characterised in that** the front section (40) of the securing unit comprises a rear radial surface (50) for abutment against the bodywork element (16).

13. Lighting or signalling device (10) according to the preceding claim, **characterised in that** the threaded rod (38) comprises a collar (42) comprising a front surface (50) for abutment of the securing unit (36, 44) against the housing (12), and a rear surface (46) for abutment against the bodywork element (16).

14. Lighting or signalling device (10) according to either of claims 13 or 12, **characterised in that** a seal is interposed between the rear radial surface (50) of the front section (40) of the securing unit and the bodywork element (16).
